# EUROPÄISCHE PATENTANMELDUNG

(11) **EP 0 736 425 A2**
(43) Veröffentlichungstag der Anmeldung: **09.10.1996**
(21) Anmeldenummer: 96105328.7
(22) Anmeldetag: 03.04.1996
(51) Int. Cl.: B60R 25/10, B60R 25/04

(54) **Diebstahlsicherung für ein Fahrzeug**

(30) Priorität: 03.04.1995 DE 19512074
(71) Anmelder: Klaschka, Rüdiger, 71263 Weil der Stadt (DE)
(72) Erfinder: Klaschka, Rüdiger, 71263 Weil der Stadt (DE)
(74) Vertreter: Ostertag, Reinhard

(57) **Zusammenfassung**

Eine Diebstahlsicherung für ein Fahrzeug umfaßt eine GPS-Einheit (16, 18), die laufend die Standortkoordinaten des Fahrzeuges bestimmt, sowie einen Speicher (28), in welchem eine vorgegebene Grenze in Form von von einem Ursprung ausgehenden radialen Grenzvektoren abgelegt ist. Ein Überwachungsrechner (26) bestimmt aus den abgelegten Grenzvektoren und dem von der GPS-Einheit (16, 18) bereitgestellten Standortvektor jeweils, ob die Grenze überschritten ist. Ist dies der Fall, erzeugt er ein Alarmsignal, durch welches ein für das Weiterfahren des Fahrzeuges notwendiger Teil des Fahrzeuges desaktiviert wird, z. B. die Motorelektronik (78).

## Beschreibung

Die Erfindung betrifft eine Diebstahlsicherung für ein Fahrzeug gemäß dem Oberbegriff des Anspruches 1.

Derartige bekannte Diebstahlsicherungen finden in Verbindung mit Kraftfahrzeugen Verwendung, insbesondere in Mietwagen oder generell in hochwertigen Kraftfahrzeugen. Diese Fahrzeuge sind mit einer GPS(Global Positioning System)-Einheit versehen, die aus den von um die Erde herum verteilten GPS-Satelliten ausgesandten Signalen den Standort der GPS-Einheit ermitteln. Diese Standortkoordinaten werden bei der bekannten Diebstahlsicherung über eine Satelliten-Funkstrecke an eine Zentrale gemeldet und dort wird von Überwachungspersonal kontrolliert, ob sich das Fahrzeug innerhalb der vereinbarten Grenzen, in der Regel Ländergrenzen bewegt oder diese zu überschreiten im Begriffe ist oder schon überschritten hat.

Eine derartige Standortüberwachung von Fahrzeugen ist mit hohem personellem Aufwand verbunden, auch ist die laufende Standort-Mitteilung über eine Satelliten-Funkstrecke teuer. Beides gilt verstärkt, wenn eine größere Anzahl von Fahrzeugen zu überwachen ist, wie dies bei größeren Mietwagenverleihern der Fall ist.

Durch die vorliegende Erfindung soll eine Diebstahlsicherung gemäß dem Oberbegriff des Anspruches 1 so weitergebildet werden, daß ohne Mitwirkung einer Zentrale gewährleistet ist, daß ein mit der Diebstahlsicherung ausgerüstetes Fahrzeug eine vorgegebene Grenze nicht überschreiten kann.

Diese Aufgabe ist erfindungsgemäß gelöst durch eine Diebstahlsicherung mit den im Anspruch 1 angegebenen Merkmalen.

Bei der erfindungsgemäßen Diebsstahlsicherung findet die laufende Kontrolle, ob sich das Fahrzeug noch in dem durch die vorgegebene Grenze umrandeten Gebiet bewegt, innerhalb der vom Fahrzeug getragenen Diebstahlsicherung selbst statt. Hierzu ist die Diebstahlsicherung mit einem Speicher für die vorgegebene Grenze versehen, und ein Überwachungsrechner vergleicht laufend, ob die von der GPS-Einheit bereitgestellten Standortkoordinaten innerhalb der vorgegebenen Grenze liegen oder nicht. Im letztgenannten Falle erzeugt der Überwachungsrechner ein Alarmsignal, durch welches das Fahrzeug zwangsläufig zum Stillstand gebracht wird. Hierzu wird durch das Alarmsignal eine für ein Fahren des Fahrzeuges notwendige Fahrzeugeinheit desaktiviert, z. B. die Zündung, die digitale Motorsteuerung, die Kraftstoffzufuhr oder dergleichen.

Vorteilhafte Weiterbildungen der Erfindung sind in Unteransprüchen angegeben.

Mit der Weiterbildung der Erfindung gemäß Anspruch 2 wird erreicht, daß sich in der Umgebung des Fahrzeuges aufhaltende Personen auf den Diebstahlversuch aufmerksam gemacht werden.

Bei einer Diebstahlsicherung gemäß Anspruch 3 erfolgt automatisch eine Information der das Fahrzeug verwaltenden Zentrale unter gleichzeitiger Mitteilung des Standortes des Fahrzeuges. Da derartige Mitteilungen nur selten anfallen, kein laufendes Überwachen des Fahrzeugstandortes notwendig ist, werden durch diese Mitteilungen die Mitarbeiter der Zentrale nur in geringem Umfange in Anspruch genommen, bzw. nicht benötigt, wenn die Diebstahlsicherung über ein im Fahrzeug installiertes Autotelefon einen Signalruf an die Polizei auslöst.

Mit der Weiterbildung der Erfindung gemäß Anspruch 4 ist gewährleistet, daß das zwangsweise Anhalten des Fahrzeuges nur dann erfolgt, wenn die Fahrzeuggeschwindigkeit gering ist, so daß das Anhalten nicht mit einer Gefährdung der Fahrzeuginsassen oder der Gefahr einer Beschädigung des Fahrzeuges verbunden ist. Auch wird der sonstige Verkehr durch das zwangsweise Anhalten des Fahrzeuges nicht gefährdet. Da an Grenzübergängen normalerweise Geschwindigkeitsbeschränkungen vorliegen, an vielen Grenzübergängen auch noch eine Kontrolle stattfindet, ist so gewährleistet, daß das Fahrzeug in Grenznähe zum Anhalten gebracht wird.

Mit der Weiterbildung der Erfindung gemäß Anspruch 5 wird erreicht, daß der Benutzer des Fahrzeuges die Diebstahlsicherung nicht durch Beschädigung der GPS-Einheit außer Betrieb setzen kann.

Auch beim autorisiertem Betreiben eines Fahrzeuges innerhalb der vorgegebenen Grenze kann es vorkommen, daß die GPS-Einheit vorübergehend keine Lagekoordinaten bereitstellen kann, wenn die GPS-Satelliten abgeschattet sind. Derartige Situationen können z. B. beim Durchfahren eines Tunnels, beim Durchfahren eines engen Tales, beim Befahren eines Parkhauses oder einer Garage oder beim Hindurchfahren durch ein Waldstück vorliegen. Bei einer Diebstahlsicherung gemäß Anspruch 6 ist gewährleistet, daß derartige Störungen des GPS-Betriebes erkannt werden und so nicht zu einem zwangsweisen Anhalten des Fahrzeuges führen.

Eine Diebstahlsicherung gemäß Anspruch 7 kann dabei einer größeren Anzahl von unterschiedlichen Ursachen für die Abschattung der GPS-Signale Rechnung tragen.

Die Weiterbildung der Erfindung gemäß Anspruch 8 ermöglicht eine kostengünstige Abspeicherung einer vorgegebenen Grenze bei hoher Auflösung der Details der Grenze, da Speicher für die Komponenten der Grenzsektoren auch bei sehr großer Zahl der Grenzsektoren preisgünstig realisierbar sind.

Die Weiterbildung der Erfindung gemäß Anspruch 9 ist im Hinblick auf eine rasche Bestimmung dessen von Vorteil, ob der momentane Standortvektor des Fahrzeuges innerhalb oder außerhalb der vorgegebenen Grenze liegt.

Die Weiterbildung der Erfindung gemäß Anspruch 10 gibt eine bevorzugte Art des Vorgehens bei dieser Bestimmung wieder.

Mit der Weiterbildung der Erfindung gemäß Anspruch 11 wird erreicht, daß sich ein Fahrzeug, das sich außerhalb der vorgegebenen Grenze befindet, ungestört auf die Grenze zu und hinter die Grenze bewegen kann, z.B. dann, wenn nach einem versehentlichen Überschreiten der Grenze das Alarmsignal wieder zurückgestellt wurde.

Die Weiterbildungen der Erfindung gemäß den Ansprüchen 12 und 13 ermöglichen ein autorisiertes Löschen des Alarmsignales.

Mit der Weiterbildung der Erfindung gemäß Anspruch 14 wird erreicht, daß ein Alarm auch dann ausgelöst wird, wenn das Fahrzeug bei nicht betätigtem Zündschalter auf einem Anhänger oder dergleichen über die vorgegebene Grenze bewegt wird. Spätestens beim Wiederanlassen des Fahrzeuges an einem außerhalb der vorgegebenen Grenze liegenden Standort erkennt die Diebstahlsicherung den nicht autorisierten Standort des Fahrzeuges und legt letzteres lahm.

Die Weiterbildung der Erfindung gemäß Anspruch 15 gestattet es, den Weg eines Fahrzeuges zurückzuverfolgen.

Dabei kann mit der Weiterbildung der Erfindung gemäß Anspruch 16 der Weg über große Strecken bzw. lange Zeiten zurückverfolgt werden, während mit der Weiterbildung der Erfindung gemäß Anspruch 17 eine hohe Auflösung der Wegaufzeichnung für einen verhältnismäßig kurzen Zeitraum von typischerweise 2 Minuten oder 1 km erhalten wird.

Mit der Weiterbildung der Erfindung gemäß Anspruch 18 ist eine kontinuierliche Aufzeichnung der Standortkoordinaten bei begrenzter Speichergröße möglich.

Nachstehend wird die Erfindung anhand von Ausführungsbeispielen unter Bezugnahme auf die Zeichnung näher erläutert. In dieser zeigen:
- Figur 1:: das Blockschaltbild einer Diebstahlsicherung für ein Kraftfahrzeug, welche das Überschreiten einer vorgegebenen Grenze durch das Fahrzeug zurückgreifend auf eine GPS-Standortbestimmung des Fahrzeuges überwacht;
- Figur 2:: eine Prinzipdarstellung, anhand welcher das Arbeiten eines Überwachungsrechners der in Figur 1 gezeigten Diebstahlsicherung erläutert wird;
- Figur 3:: ein Flußdiagramm, welches die wesentlichen Arbeitsschritte eines Überwachungsrechners der Diebstahlsicherung nach Figur 1 wiedergibt;
- Figur 4:: ein Flußdiagramm, in welchem ein der Aufzeichnung von Standortkoordinaten dienender Unterprogrammblock des Flußdiagrammes von Figur 3 gezeigt ist;
- Figur 5:: ein Schaltbild eines Sabotage-Überwachungskreises der Diebstahlsicherung nach Figur 1;
- Figur 6:: eine zu Figur 4 ähnliche Darstellung, in welcher jedoch ein abgewandelter Sabotage-Überwachungskreis wiedergegeben ist; und

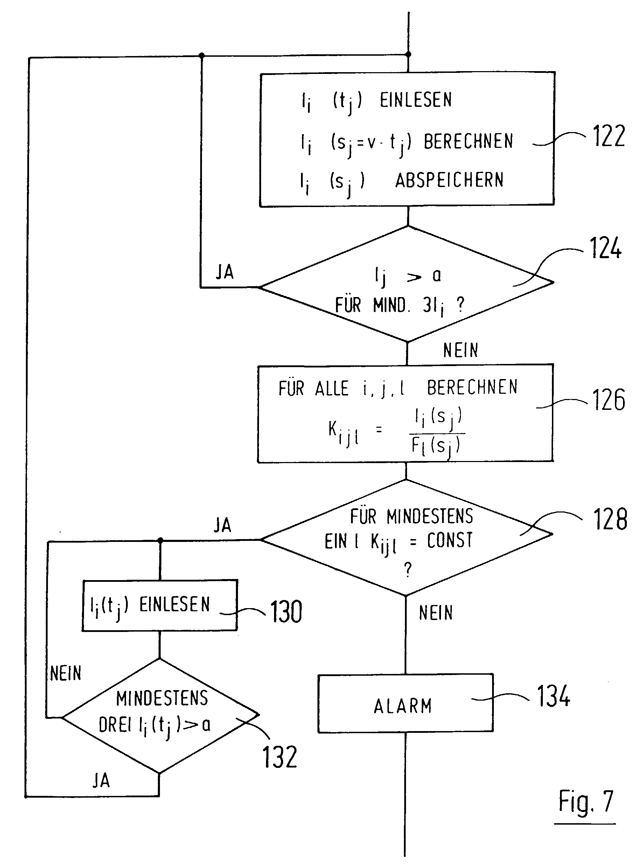

- Figur 7:: ein Flußdiagramm, welches die wesentlichen Schritte des Programmes eines Rechners des Sabotageüberwachungskreises nach Figur 4 wiedergibt.

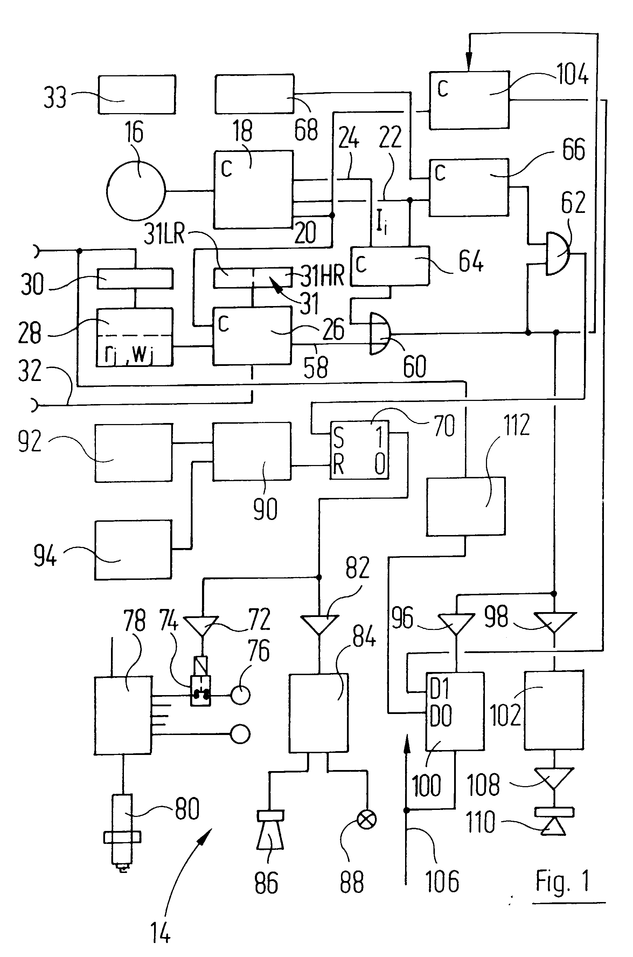

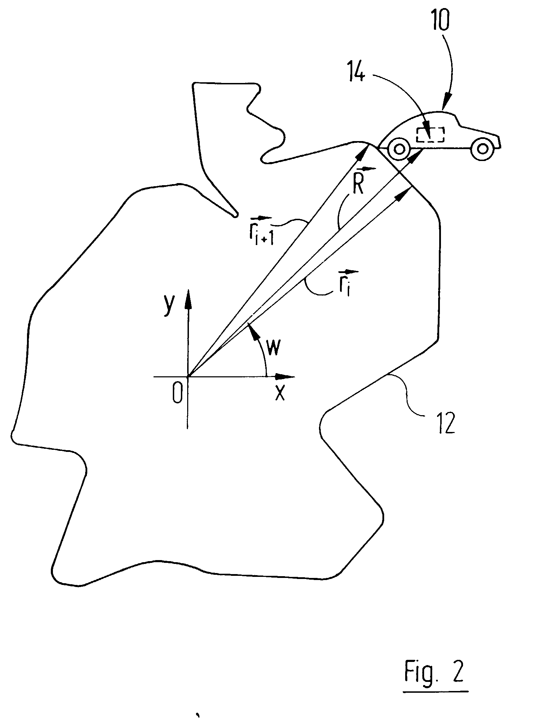

In Figur 2 ist bei 10 ein Kraftfahrzeug gezeigt, das von einer Mietwagenfirma an einen Benutzer vermietet worden ist. Die Mietwagenfirma hat mit dem Benutzer vereinbart, daß das vermietete Fahrzeug nur innerhalb einer vorgegebenen Grenze benutzt werden darf, die in Figur 2 mit 12 bezeichnet ist. Um dies zu überwachen, ist das Kraftfahrzeug 10 mit einer insgesamt mit 14 bezeichneten Diebstahlsicherung ausgerüstet, die nunmehr unter Bezugnahme auf Figur 1 näher erläutert wird.

Die Diebstahlsicherung 14 arbeitet grob gesprochen so, daß sie unter Zurhilfenahme der GPS-Navigation den momentanen Standort des Kraftfahrzeuges 10 bestimmt und ein Weiterfahren dieses Kraftfahrzeuges unterbindet, wenn sich dieses außerhalb der vorgegebenen Grenze 12 befindet.

Hierzu ist das Fahrzeug mit einer GPS-Antenne 16 versehen, die mit dem Eingang einer GPS-Auswerteeinheit 18 verbunden ist. Letztere bestimmt in an sich bekannter Weise aus den empfangenen Signalen von mindestens drei GPS-Satelliten die geographische Länge und Breite des Fahrzeugstandortes. Einzelheiten derartiger GPS-Auswerteeinheiten sind an sich bekannt und brauchen hier nicht im einzelnen beschrieben zu werden.

Die GPS-Auswerteeinheit 18 stellt auf einer ersten Ausgangsleitung 20 die Standortkoordinaten R bereit, auf einer zweiten Ausgangsleitung 22 wird ein der Geschwindigkeit v des Fahrzeuges zugeordnetes Signal bereitgestellt, und auf einer dritten Ausgangsleitung 24 stehen Daten, die Information über die jeweils bei der Standortbestimmung berücksichtigten GPS-Satelliten i und die jeweilige Stärke der empfangenen GPS-Signale Iᵢ enthalten.

Die Ausgangsleitung 20 der GPS-Auswerteeinheit 18 ist mit dem einen Eingang eines Überwachungsrechners 26 verbunden. Ein zweiter Eingang des Überwachungsrechners 26 ist mit einem großen Speicher 28 verbunden. Dieser enthält mehrere wahlweise überwachbare Grenzen, wobei durch einen mit dem Speicher 28 verbundenen Adressierkreis 30 vorgegeben wird, welche der eingespeicherten Grenzen für das Auslesen durch den Überwachungsrechner 26 aktiviert wird.

Die Grenzen sind im Speicher 28 jeweils durch Radiusvektoren rᵢ festgelegt, die von einem im Inneren des durch die Grenze 12 umschlossenen Bereiches liegenden Koordinatenursprung O zu aufeinanderfolgenden Punkten der Grenze 12 verlaufen. Die Vektoren rᵢ brauchen nicht in Winkelrichtung äquidistant gewählt zu sein, sie liegen für stark gekrümmte Bereiche der Grenze 12 dicht, haben für wenig gekrümmte Grenzbereiche größeren Abstand. Vorzugsweise sind die Vektoren rᵢ in Polarkoordinaten abgelegt, so daß ihre Komponenten dem Winkel w und der Vektorlänge rᵢ entsprechen.

Aus Figur 2 ist direkt erkennbar, daß ein Standortvektor R dann außerhalb der Grenze 12 liegt, wenn er länger ist als beide der ihm in Winkelrichtung am nächsten benachbarten Grenzvektoren rᵢ bzw. rᵢ₊₁.

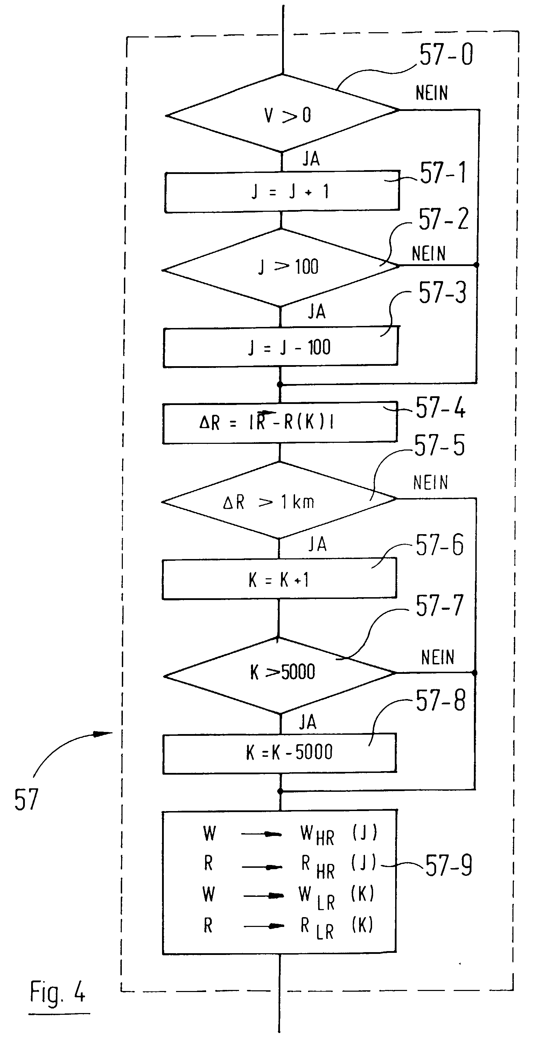

Der Überwachungsrechner 26 arbeitet ferner mit einem Streckenspeicher 31 zusammen, in welchem die Lagekoordinaten laufend abgelegt werden. Der Streckenspeicher 31 hat einen mit niederer Wegauflösung betriebenen Speicherabschnitt 31LR sowie einen mit hoher Wegauflösung betriebenen Speicherabschnitt 31HR. Der Speicherabschnitt 31LR kann typischerweise 5000 Speicherzellen für jeweils ein Lagekoordinatenpaar enthalten, wobei die jeweils zum Ablegen von Standordkoordinaten zu verwendende Speicherzelle in Abhängigkeit von der zurückgelegten Wegstrecke adressiert wird, typischerweise in Abständen von jeweils einem Kilometer. Der mit hoher Auflösung betriebene Speicherabschnitt 31HR wird vorzugsweise auf Zeitbasis adressiert, typischerweise wird die Adresse der jeweils zu beschreibenden Speicherzellen in jedem Meßzyklus um eins erhöht. Einzelheiten des Ablegens der Standortkoordinaten im Streckenspeicher 31 werden später unter Bezugnahme auf die Figur 4 noch genauer beschrieben.

Das Auslesen des Streckenspeichers 31 erfolgt unter Steuerung durch den Überwachunsrechner 26 über eine Leitung 32.

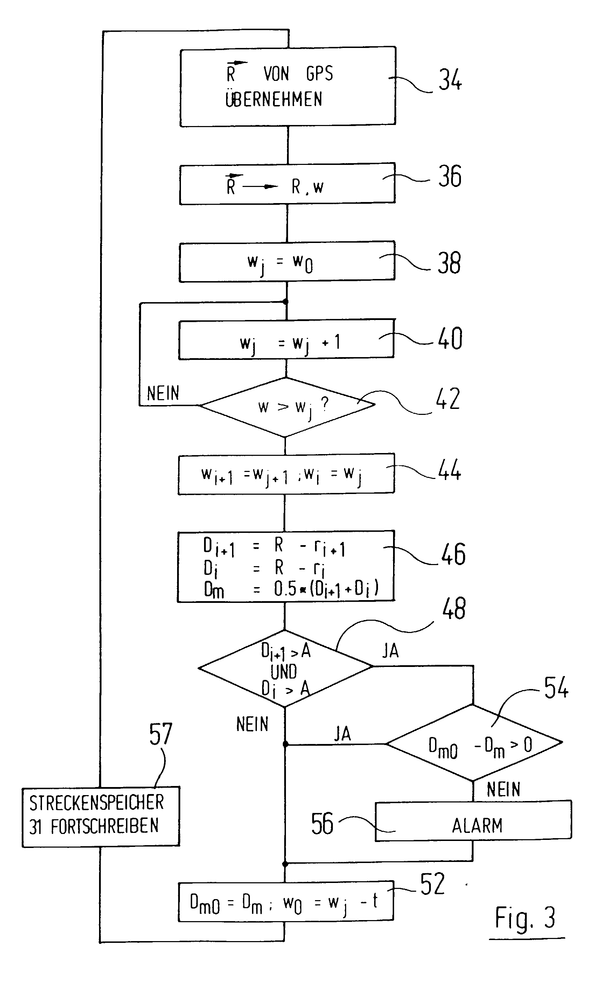

In der Praxis kann der Überwachungsrechner 26 im wesentlichen gemäß dem in Figur 3 wiedergegebenen Flußdiagramm arbeiten. Bevor dieses nun erläutert wird, sei noch darauf hingewiesen, daß die gesamte Diebstahlsicherung nach Figur 1 in Meßzyklen arbeitet, welche durch einen Taktgeber 33 vorgegeben sind. Der Taktgeber 33 steuert alle in den Meßzyklen arbeitenden Schaltkreise von Figur 1 an, wobei aber die entsprechenden Steuerleitungen der besseren Übersichtlichkeit halber weggelassen sind. Die entsprechenden Schaltkreise sind aber zur Verdeutlichung durch ein C in der linken oberen Ecke gekennzeichnet.

In einem ersten Programmblock 34 übernimmt der Überwachungsrechner 26 jeweils zum Ende eines Meßzyklus einen neuen Standortvektor R von der GPS-Auswerteinheit 18. In einem anschließenden Programmblock 36 erfolgt eine Umsetzung des Standortvektors R in auf den Ursprung O bezogene Polarkoordinaten w,R.

In einem weiteren Programmblock 38 wird ein Winkel-Aus-ausgangswert w₀ für die Suche der dem Standortvektor winkelmäßig benachbarten Grenzvektoren vorgegeben. Dieser wird normalerweise aus dem Winkelwert des vorhergehenden Meßzyklus abgeleitet.

In einem weiteren Programmblock 40 wird der Winkelwert um eine Speicherzelle weitergeschaltet, wobei nochmals darauf hingewiesen werden soll, daß die in einem Speicherfeld abgelegten Winkelwerte wⱼ der Grenzvektoren nicht äquvidistant aufeinanderzufolgen brauchen.

Bei einer Verzweigung 42 wird geprüft, ob der Winkelwert w des Standortvektors größer ist als der Winkelwert wⱼ des gerade abgerufenen Grenzvektors. Ist dies nicht der Fall, wird der nächste Grenzvektor abgerufen.

Überschreitet w das erste Mal wⱼ, so wird dieser Winkelwert zusammen mit dem Winkelwert für den in Winkelrichtung folgenden Grenzvektor im Programmblock 44 bereitgestellt, und die zu diesen Grenzvektor-Winkeln gehörenden Vektorlängen rᵢ und rᵢ₊₁ werden dazu verwendet, in einem Programmblock 46 den Längenunterschied Dᵢ₊₁ zwischen dem Standortvektor R und dem Grenzvektor rᵢ₊₁ zu berechnen, den entsprechenden Abstand Dᵢ für den Grenzvektor rᵢ zu berechnen und den mittleren Abstand zwischen diesen beiden Vektoren (Dₘ) zu berechnen.

In einer Verzweigung 48 wird geprüft, ob die im Programmblock 46 berechneten Abstände Dᵢ₊₁ und Dᵢ beide größer als eine vorgegebene Zahl A sind, welche eine noch zulässige kleine Grenzüberschreitung charakterisiert. Diese Zahl ist (wie auch andere feste Größen, nach denen der Überwachungsrechner 26 arbeitet, und sein Programm) in einem Figur 1 nicht getrennt gezeigten zum Rechner gehörenden Rechner-Arbeitsspeicher abgelegt, wobei sich versteht, daß die verschiedenen mit dem Überwachungsrechner 26 zusammenarbeitenden logisch getrennten Speicher in der Praxis Bereiche eines einzigen physikalischen Speichers sein können.

Wird in dem Block 48 festgestellt, daß zumindest einer der Werte Dᵢ und Dᵢ₊₁ kleiner ist als A, so liegt keine Grenzüberschreitung vor, und der Überwachungsrechner 26 speichert in einem weiteren Programmblock 52 den mittleren Grenzabstand Dₘ in einer Variablen Dₘ₀ und setzt den Ausgangswert für die Winkelabtastung w₀ um eine vorgegebene Speicherzellenzahl t zurück. Die Zahl t ist im Hinblick auf die Länge des Meßzyklus der GPS-Auswerteinheit 18 und die maximale Fahrzeuggeschwindigkeit gewählt. Nach Abwicklung des Programmblockes 52 kehrt der Überwachungsrechner 26 dann wieder in den Programmblock 34 zurück.

Wird in der Verzweigung 48 eine Grenzüberschreitung festgestellt, so wird in einer weiteren Verzweigung 54 geprüft, ob der Grenzabstand des Fahrzeuges gegenüber dem letzten Meßzyklus abgenommen hat.

Ist dies der Fall, so läuft das Programm mit dem Programmblock 52 weiter, wie oben beschrieben. Auf diese Weise kann sich ein Fahrzeug nach einer gegebenenfalls im nachhinein autorisierten einmaligen Grenzüberschreitung wieder auf die Grenze zubewegen.

Hat der Grenzabstand des Fahrzeuges nicht abgenommen, so läuft das Programm von der Verzweigung 54 in einen Programmblock 56, in welchem Alarm ausgelöst wird. Das entsprechende Alarmsignal wird auf einer Ausgangsleitung 58 des Überwachungsrechners 26 bereitgestellt. Nach Alarmauslösung läuft das Programm in diesem Falle dann ebenfalls zum Programmblock 52 und von dort über einen Programmblock 57 zum Eingangs-Programmblock 34.

In dem Programmblock 57 wird das laufende Ablegen der Lagekoordinaten in den Speicherbereichen 31LR und 31HR des Standortkoordinatenspeichers 31 abgewickelt.

Damit die mit hoher Auflösung erfolgende zeitabhängige Wegregistrierung eingefroren wird, wenn das Fahrzeug stillsteht (z.B. Verwendung als Unfallschreiber-Blackbox), ist im Programmblock 57 ist zunächst eine Verzweigung 57 57-0 vorsehen, die prüft, ob die Fahrzeuggeschwindigkeit v null ist. In diesem Falle wird dann die Erhöhung der Adress J des hochauflösenden Speicherbereiches 31HR umgangen.

In einem nächsten Programmblock 57-1 wird der Adresszähler J um eins erhöht, welcher die Speicherzähleradresse des Speicherabschnittes 31HR vorgibt.

In einer Verzweigung 57-2 wird geprüft, ob die Adresse J größer ist als die im Speicherbereich 31HR zur Verfügung stehende Anzahl von Speicherzellen, wobei zur Erläuterungszwecken angenommen sei, daß der Speicherbereich 31HR 100 Speicherzellen enthält. Ist die errechnete Speicheradresse J größer als die vorgegebene Speicherzellenzahl, wird sie um diese vermindert (Programmblock 57-3).

In einem weiteren Programmblock 57-4 wird der Abstand zwischen dem momentanen Standortvektor R und dem zuletzt im Speicherbereich 31LR abgelegten Standortvektor R(K) berechnet. Ist dieser Abstand größer als ein vorgegebenes Weginkrement (in der Praxis 1 km), was in einer Verzweigung 57-5 geprüft wird, so wird in einem weiteren Programmblock 57-6 die Adresse K der zu beschreibenden Speicherzelle des Speicherbereiches 31LR um eins erhöht.

In einer Verzweigung 57-7 wird geprüft, ob die so berechnete Speicheradresse größer ist als die Anzahl im Speicherbereich 31LR vorgesehener Speicherzellen (beim betrachteten Ausführungsbeispiel 5000). Ist letzteres der Fall, so wird in einem Programmblock 57-8 die Adresse K um die Anzahl der insgesamt vorgesehenen Speicherzellen des Speicherbereiches 31LR vermindert.

In einem weiteren Programmblock 57-9 erfolgt dann das Abspeichern der momentanen Lagekoordinaten w,R in der Speicherzelle J des Speicherbereiches 31HR und der Speicherzelle K des Speicherbereiches 31LR. Anschließend wird dann der Programmblock 57 zum Programmblock 34 von Figur 3 verlassen.

Aus Figur 3 ist ersichtlich, daß der Überwachungsrechner 26 das Alarmsignal wieder beendet, wenn keine Grenzüberschreitung mehr vorliegt oder sich das Fahrzeug von außen auf die Grenze zubewegt.

Das auf der Ausgangsleitung 58 stehende Alarmsignal gelangt über ein ODER-Glied 60 auf einen Eingang eines UND-Gliedes 62. Der zweite Eingang des ODER-Gliedes 60 ist mit dem Ausgang eines Sabotage-Überwachungskreises 64 verbunden, der eingangsseitig das auf der Leitung 22 stehende Geschwindigkeitssignal und die auf der Leitung 24 stehenden Daten erhält, welche über die Stärke Iᵢ der empfangenen GPS-Signale i Rechnung legen.

Der zweite Eingang des UND-Gliedes 62 ist mit dem Ausgang eines Komparators 66 verbunden. Dieser ist an seinem einen Eingang mit dem auf der Leitung 22 stehenden Geschwindigkeitssignal beaufschlagt und ist an seinem zweiten Eingang mit dem Ausgang eines Speichers 68 verbunden, in welchem ein einer vorgegebenen kleinen Fahrzeug zugeordnetes Signal abgelegt ist. Der Komparator 66 erzeugt so immer dann ein Ausgangssignal, wenn die Fahrzeuggeschwindigkeit unter die vorgegebene kleine Geschwindigkeit abgefallen ist.

Damit erhält man am Ausgang des UND-Gliedes 62 immer dann ein Signal, wenn das Kraftfahrzeug 10 die Grenze 12 überschritten hat (oder sich dieser nähert (negativer Wert der Konstanten A)) und gleichzeitig die Fahrzeuggeschwindigkeit klein ist. Durch das Ausgangssignal des UND-Gliedes 62 wird ein RS-Flipflop 70 gesetzt. Dessen "1"-Ausgang ist über einen Verstärker 72 mit der Steuerklemme eines steuerbaren Schalters 74 verbunden, der in die Verbindungsleitung zwischen einem Sensor 76 und den zugeordneten Eingang einer Motor-Steuereinheit 78 eingefügt ist. Bei dem Sensor 76 handelt es sich um einen solchen, der für das Arbeiten der Motor-Steuereinheit 78 lebensnotwendig ist, wobei die Motor-Steuereinheit 78 so arbeitet, daß sie bei Wegfall des Ausgangssignales des Sensors 76 das Arbeiten des Motors unterbricht, z.B. die Hochspannungsbeaufschlagung einer schematisch bei 80 angedeuteten Zündkerze unterbricht.

Es versteht sich, daß man den steuerbaren Schalter 74 auch in der Stromversorgung für die Motor-Steuereinheit 78 anordnen kann; es wird aber vorgezogen, diesen Schalter in die Verbindungsleitung zwischen dem Sensor 76 und der Motor-Steuereinheit 78 vorzusehen, da das Fehlen der Versorgungsspannung an der Motor-Steuereinheit 78 verhältnismäßig leicht festgestellt werden kann und durch Verlegen eines spannungsführenden Kabels behoben werden kann.

Der "1"-Ausgang des Flipflops 70 ist ferner über einen Verstärker 82 mit einem Eingang einer Alarmanlage 84 des Fahrzeuges verbunden, durch welche bei Ansteuerung eine Hupe 86 des Fahrzeuges sowie die schematisch bei 88 angedeutete Warnblinkanlage des Fahrzeuges in Betrieb genommen wird.

Um das Fahrzeug nach einer versehentlichen Grenzüberschreitung wieder funktionsfähig machen zu können, ist mit dem Rückstelleingang des Flipflops 70 der Ausgang eines Komparators 90 verbunden. Dieser ist an seinem einen Eingang mit einem Eingabefeld 92, an seinem zweiten Eingang mit einem Codespeicher 94 verbunden. Letzterer enthält eine dem Benutzer des Fahrzeuges unbekannte, nur auf telefonischen Rückruf mitgeteilte Codenummer, die am Eingabefeld 92 eingegeben zur Ausgabe eines Signales am Ausgang des Komparators 90 führt.

Das Ausgangssignal des UND-Gliedes 62 dient ferner über Verstärker 96, 98 zur Aktivierung eines Modems 100 bzw. eines Sprachgenerators 102.

Das Modem 100 ist mit einer Dateneingangsklemme DI versehen, die mit dem Ausgang eines Parallel-/Seriellumsetzers 104 verbunden ist, der durch das Ausgangssignal des UND-Gliedes 62 aktiviert wird und die von der GPS-Auswerteeinheit bereitgestellten Standortkoordinaten erhält. Auf diese Weise kann das Modem 100, das mit einer mit dem Einschalten aktivierten Selbstwähleinrichtung versehen ist, bei einer festgestellten Grenzüberschreitung die momentanen Standortkoordinaten des Fahrzeuges direkt über einen Antenne 106 an die Verleihzentrale mitteilen. Das Modem 100 kann in der Praxis Bestandteil eines im Fahrzeug angebrachten Funktelefones sein.

Der Sprachgenerator 102 enthält eine vorgegebene Botschaft an den Fahrer des Fahrzeuges, mit welcher dieser darauf aufmerksam gemacht wird, daß das Fahrzeug bei nächstmöglicher Gelegenheit außerhalb des fließenden Verkehres abzustellen ist und der Vermieter anzurufen ist. Diese Botschaft wird über einen Verstärker 108, der Teil des Autoradios sein kann, auf einen Lautsprecher 110 gegeben, der ebenfalls Teil der Bordradios sein kann.

In Abwandlung des oben beschriebenen Ausführungsbeispieles kann man anstelle eines festen Codespeichers 94 einen Zufallscode-Generator 94 einsetzen, der die von ihm erzeugte Zufallszahl jeweils für eine vorgegebene Zeitspanne, die für einen Rückruf ausreicht und in der Praxis 30 Minuten betragen kann, einfriert, wenn das Fahrzeug steht, im übrigen aber laufend Zufallszahlen erzeugt. Diese Zufallszahl kann dann zusammen mit der oben angesprochenen Botschaft über den Lautsprecher 110 mit ausgegeben werden. Der Benutzer des Fahrzeuges muß dann diese Zufallszahl der Zentrale mitteilen und erhält von dieser dann einen Entriegelungscode, der in für Außenstehende nicht nachvollziehbarer Weise mit der Zufallszahl zusammenhängt. Dieser Entriegelungscode wird dann von dem Komparator 90 daraufhin geprüft, ob er unter Berücksichtigung der dem Komparator 90 bekannten Umsetzvorschrift zwischen Zufallscode und Entriegelungscode mit dem Zufallscode übereinstimmt.

Wie aus Figur 1 ersichtlich, hat das Modem 100 auch eine Datenausgangsklemme DO, die über einen Seriell-/Parallel-Umsetzer 112 mit dem Eingang des Adressierkreises 30 verbunden ist. Auf diese Weise ist es der Verleihzentrale über Funk möglich, die vorgegebene Grenze 12 zu variieren, z.B. um ein Nachbarland zu erweitern, wenn hierfür die Voraussetzungen vorliegen. In der Zentrale kann der Adressierkreis direkt über eine Buchse gesetzt werden.

Wie aus Figur 4 ersichtlich, enthält der Sabotage-Überwachungskreis einen Vergleichsrechner 114, der mit einem Abschattungsprofil-Speicher 116 zusammenarbeitet. In letzterem sind für unterschiedliche Weginkremente sⱼ, die ein Fahrzeug nach Begegnung mit einem die GPS-Signale abschattenden Hindernis durchläuft, unterschiedliche Abschattungsprofile Fₗ (beim betrachteten Ausführungsbeispiel deren drei) in Form von Stützpunkten abgelegt.

Weitere Eingänge des Vergleichsrechners 114 erhalten die von der GPS-Auswerteeinheit 18 bereitgestellten Intensitätssignale Iᵢ für die verschiedenen empfangenen GPS-Satelliten i. Ferner erhält der Vergleichsrechner 114 das auf der Leitung 22 stehende Geschwindigkeitssignal v.

Ferner arbeitet der Vergleichsrechner 114 mit einem Schreib-/Lesespeicher 118 zusammen, in welchem die sukzessive einlaufenden Intensitätssignale Iᵢ nach Umrechnung des Zeitpunktes des Einlaufens in die der Geschwindigkeit des Fahrzeuges entsprechende Wegstrecke abgelegt werden (Iᵢ(sⱼ)). Der Vergleichsrechner 114 arbeitet getaktet durch einen Hilfstaktgeber 120, der schneller läuft als der zentrale Taktgeber 32 und in der Praxis durch einen hochfrequenten Ausgang des letzteren gebildet sein kann.

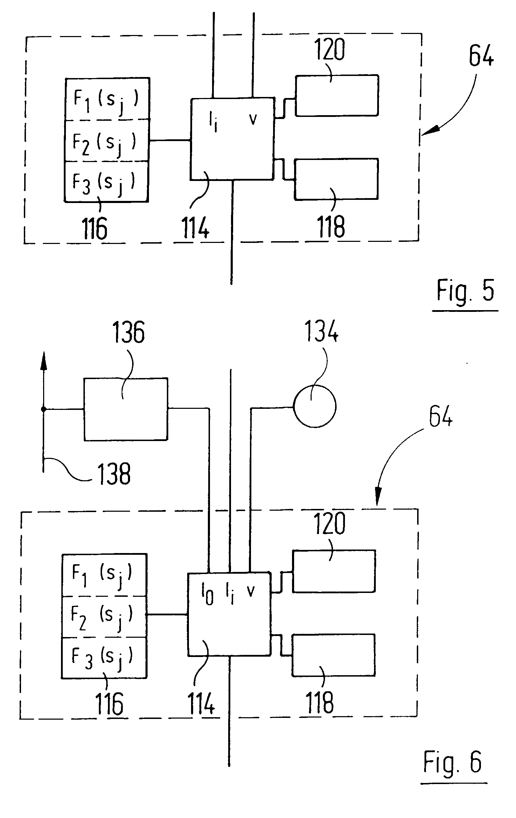

Die Arbeitsweise des Vergleichsrechners 114 wird nun anhand des Flußdiagrammes von Figur 6 besprochen:

In einem ersten Programmblock 122 werden die von der GPS-Auswerteeinheit 18 bereitgestellten Intensitätssignale Iᵢ (tⱼ) eingelesen (tⱼ = Zeitpunkt des j-ten Meßintervalles, welches durch den Taktgeber 32 vorgegeben ist). Aus diesen in Abhängigkeit von der Zeit gegebenen Intensitätssignalen und der Fahrzeuggeschwindigkeit berechnet der Vergleichsrechner 114 dann die wegabhängigen Intensitätssignale Iᵢ(sⱼ) und speichert diese im Schreib-/Lesespeicher 118 zyklisch ab, wobei immer die früher erhaltenen Intensitätswerte um eine Speicherzelle verschoben werden und der älteste Intensitätswert verworfen wird. Typischerweise kann der Speicher 118 etwa 10 bis 100 Speicherzellen umfassen.

In einer Verzweigung 124 wird dann geprüft, ob die zuletzt erhaltenen Intensitätswerte für mindestens drei empfangene Satellitensignale größer sind als ein unterer Grenzwert a Ist dies der Fall, so kann der Überwachungsrechner 26 die Standortkoordinaten problemlos ermitteln, und von der Verzweigung 124 erfolgt ein Rücksprung zum Eingang des Programmblockes 122.

Findet die GPS-Auswerteeinheit 18 nur noch für zwei oder weniger GPS-Satelliten verwertbare Signale, so erfolgt von der Verzweigung 124 ein Übergang in einen Programmblock 126. Dieser vergleicht grob gesprochen die im Schreib-/Lesespeicher 118 abgespeicherten Intensitätsprofile Iᵢ (sⱼ), welche die Abnahme der GPS-Signale in Abhängigkeit vom seit Begegnen eines Hindernisses zurückgelegten Weg enthalten, mit den verschiedenen Abschattungsprofilen Fₗ (beim betrachteten Ausführungsbeispiel ist l = 3), die in dem Abschattungsprofil-Speicher 116 liegen. Hierzu werden die zu vergleichenden Kurven zunächst zu verschoben, daß der mittlere quadratische Abstand der verschiedenen Kurven-Stützpunkte ein Minimum wird, und dann wird festgestellt, ob die gemessenen Kurven Iᵢ mit mindestens einem der Abschattungsprofile Fₗ geometrisch verwandt sind. Dies kann z.B. dadurch erfolgen, daß man die gespeicherten Intensitätsprofile durch die Abschattungs-Intensitätsprofile dividiert und nachprüft, ob die hierbei erhaltene Größe Kᵢⱼₗ = Iᵢ(sⱼ)/Fₗ(sⱼ) eine Konstante ist, also nicht von j abhängt.

In einer Verzweigung 128 wird geprüft, ob dies für mindestens ein l gilt. Falls ja, wird die GPS-Einheit der Diebstahlsicherung durch ein im normalen Fahrbetrieb angetroffenes Hindernis vorübergehend abgeschattet (z.B.

Unterfahren einer Brücke, Fahren durch einen Tunnel, Einfahren in ein Parkhaus oder einer Garage, Fahren durch einen Wald), und das Programm wird mit einem Programmblock 130 fortgesetzt, in welchem neue Intensitätssignale von der GPS-Auswerteeinheit 18 eingelesen werden. In einer weiteren Verzweigung 132 wird geprüft, ob mindestens drei der gerade empfangenen Intensitätssignale größer sind als die vorgegebene Schwelle a, was anzeigt, daß die GPS-Auswerteinheit 18 wieder Lagekoordinaten angeben kann. Ist dies der Fall, so erfolgt wieder ein Rücksprung zum Eingangsblock 122. Ist dies nicht der Fall erfolgt ein Rücksprung zum Programmblock 130.

Wird in der Verzweigung 128 festgestellt, daß die gemessenen Intensitätsprofile Iᵢ (sⱼ) mit keinem der abgespeicherten Abschattungsprofile übereinstimmen, so wird angenommen, daß der Verlust der Arbeitsfähigkeit der GPS-Einheit durch Sabotage bedingt ist, z.B. durch Unterbrechen der Verbindung zwischen der GPS-Antenne 16 und der GPS-Auswerteeinheit 18 bei stillstehendem Fahrzeug. In diesem Falle wird dann ein Programmblock 134 abgewickelt, in welchem ein Alarmsignal erzeugt wird, welches dann am Ausgang des Sabotage-Überkreises 64 ein Alarmsignal bereitgestellt wird und über das ODER-Glied 60 zum zwangsweisen Stoppen des Fahrzeuges und zum Auslösen der Alarmanlage verwendet wird, wie oben beschrieben.

Das in Figur 5 gezeigte Ausführungsbeispiel für den Sabotage-Überwachungskreis 64 entspricht weitgehend demjenigen nach Figur 4. Der Vergleichsrechner 114 erhält nun aber ein der Fahrzeuggeschwindigkeit zugeordnetes Signal v vom bei 134 angedeuteten Tachometer des Fahrzeuges, und zur Beurteilung dessen, ob das Verschwinden der GPS-Signale durch das Vorbeifahren an einem Hindernis oder durch Manipulation bedingt ist, werden nicht die GPS-Signale selbst verwendet, die nur sehr schwach sind. Vielmehr ist ein Breitbandverstärker 136, der sämtliche UKW-Kanäle gleichermaßen erfaßt, mit der Radioantenne 138 des Fahrzeuges verbunden. Man erhält somit am Ausgang des Breitbandverstärkers 136 ein starkes Signal, welches beim Einfahren in Gebäude oder beim Durchfahren eines Tunnels in gut verfolgbarer Weise abgeschwächt wird.

Der Vergleichsrechner 114 arbeitet nun beim Ausführungsbeispiel nach Figur 5 nach einem gegenüber Figur 6 etwas abgewandeltem Flußdiagramm, indem er für das Erkennen eines bei normaler Fahrt angetroffenen Hindernisses den zeitlichen Verlauf des Ausgangssignales I₀ des Breitbandverstärkes 136 anstelle der Signale Iᵢ verwendet. In den Programmblöcken 122 und 126 ist somit jeweils der Index i durch den Index 0 zu ersetzen.

Bei einer vereinfachten Ausführungsform des Sabotage-Überwachungskreises kann dieser auch nur prüfen, ob das Verschwinden der GPS-Satellitensignale bei fahrendem Fahrzeug erfolgt. Ist dies der Fall, kann in der Regel davon ausgegangen werden, daß die Abschattung durch ein Hindernis erfolgt, an welchem das Fahrzeug vorbeifährt. Verschwinden die GPS-Satellitensignale dagegen bei stehendem Fahrzeug, so bedeutet dies in der Regel eine Manipulation an der GPS-Einheit.

Wie aus der oben gegebenen Beschreibung ohne weiteres ersichtlich, erfolgt bei der beschriebenen Diebstahlsicherung für ein Kraftfahrzeug eine laufende Überwachung des Standortes des Fahrzeuges im Hinblick auf die Überschreitung der Grenze 12 ohne irgendwelche Mitwirkung von Personal in der Leitzentrale. Wird die Grenze 12 überschritten, so wird das Fahrzeug zwangsläufig stillgelegt und es erfolgt eine Meldung an die Zentrale.

Ein Wiederinbetriebnehmen des zwangsweise stillgelegten Fahrzeuges ist unter Mitwirkung der Zentrale auf einfache Weise zu realisieren.

Sabotageakte an der GPS-Einheit führen ebenfalls zu einem zwangsweisen Stillegen des Fahrzeuges. Das mit der Diebstahlsicherung versehene Fahrzeug wird auch dann zwangsweise stillgelegt und es wird Alarm ausgelöst, wenn das Fahrzeug auf einem anderen Fahrzeug über die Grenze transportiert wird.

Die Erfindung wurde oben stehend unter Bezugnahme auf ein Kraftfahrzeug beschrieben. Es versteht sich, daß die erfindungsgemäße Diebstahlsicherung gleichermaßen für andere landgebundene Fahrzeuge, Schiffe und Flugzeuge verwendet werden kann.

## Patentansprüche

1. Diebstahlsicherung für ein Fahrzeug (10), mit einer GPS-Einheit, die eine GPS-Antenne (16) und eine GPS-Auswerteeinheit (18) umfaßt, und mit einer Einrichtung zum Vergleichen des von der GPS-Einheit ermittelten Fahrzeugstandortes mit einer vorgegebenen Grenze (12), dadurch gekennzeichnet, daß auf dem Fahrzeug ferner ein Speicher (28) für die vorgegebene Grenze (12) und ein Überwachungsrechner (26) vorgesehen sind, wobei letzterer die von der GPS-Einheit bereitgestellten Standortkoordinaten laufend mit der im Speicher (28) abgelegten Grenze (12) vergleicht und ein Alarmsignal erzeugt, wenn die gemessenen Standortkoordinaten jenseits der vorgegebenen Grenze (12) liegen, und daß durch das Alarmsignal eine für ein Weiterfahren des Fahrzeuges (10) notwendige Fahrzeugeinheit (78) desaktiviert wird.

2. Diebstahlsicherung nach Anspruch 1, dadurch gekennzeichnet, daß durch das Alarmsignal zugleich ein akustischer und/oder optischer Alarmgeber (86, 88) aktiviert wird.

3. Diebstahlsicherung nach Anspruch 1 oder 2, dadurch gekennzeichnet, daß durch das Alarmsignal zugleich ein Modem (100) aktiviert wird, welches die Standortkoordinaten des Fahrzeuges (10) überträgt

4. Diebstahlsicherung nach einem der Ansprüche 1 bis 3, dadurch gekennzeichnet, daß ein Geschwindigkeitsdiskriminator (66) vorgesehen ist, der ein Ausgangssignal dann erzeugt, wenn die Geschwindigkeit des Fahrzeuges (10) eine vorgegebene Schwelle unterschreitet, und daß die für das Weiterfahren des Fahrzeuges (10) notwendige Fahrzeugeinheit (78) nur dann durch das Alarmsignal desaktiviert wird, wenn zugleich ein Ausgangsignal des Geschwindigkeitsdiskriminators (66) vorliegt.

5. Diebstahlsicherung nach einem der Ansprüche 1 bis 4, gekennzeichnet durch einen Sabotage-Überwachungskreis (64), welcher ein Alarmsignal erzeugt, wenn die GPS-Einheit (16, 18) keine Standortkoordinaten mehr überstellt.

6. Diebstahlsicherung nach Anspruch 5, dadurch gekennzeichnet, daß der Sabotage-Überwachungskreis (64) die Intensität der GPS-Satellitensignale wiedergebene Ausgangssignale (Iᵢ) der GPS-Einheit (16, 18) laufend in ihrem zeitlichen Verlauf überwacht und dann kein Alarmsignal erzeugt, wenn die zeitliche Änderung der GPS-Intensitätssignale (Iᵢ) einem vorgegebenen Abschattungsprofil (Fₗ) entspricht oder bei von null verschiedenener Fahrzeuggeschwindigkeit erhalten wird.

7. Diebstahlsicherung nach Anspruch 6, dadurch gekennzeichnet, daß der Sabotage-Überwachungskreis (64) Speicher (116) für eine Mehrzahl unterschiedlicher Abschattungsprofile (Fₗ) aufweist.

8. Diebstahlsicherung nach einem der Ansprüche 1 bis 7, dadurch gekennzeichnet, daß die Grenze (12) durch eine Vielzahl von strahlenförmig von einem im Inneren des durch die Grenze umschlossenen Gebietes liegenden Ursprungspunkt (O) ausgehenden Grenzvektoren (rᵢ) dargestellt ist.

9. Diebstahlsicherung nach Anspruch 8, dadurch gekennzeichnet, daß die Grenzvektoren (rᵢ) in Polarkoordinaten (wⱼ, rⱼ) abgelegt sind.

10. Diebstahlsicherung nach Anspruch 8 oder 9, dadurch gekennzeichnet, daß der Überwachungsrechner (26) die Standortkoordinaten des Fahrzeuges in die für die Grenzdarstellung dienenden Ursprung (O) entsprechenden Standortkoordinaten umrechnet, die dem Standortvektor winkelmäßig am nächsten liegenden Grenzvektoren bestimmt und ein Alarmsignal dann erzeugt, wenn der Standortvektor länger als jeder dieser beiden nächstbenachbarten Grenzvektoren ist.

11. Diebstahlsicherung nach Anspruch 10, dadurch gekenn zeichnet, daß der Überwachungsrechner (26) den Unterschied (Dₘ) zwischen der Länge des Standortvektors (R) und den benachbarten Grenzvektoren (rᵢ, rᵢ₊₁) speichert und dann kein Alarmsignal erzeugt, wenn dieser Unterschied von einer zur nächsten Meßperiode abnimmt.

12. Diebstahlsicherung nach einem der Ansprüche 1 bis 11, gekennzeichnet durch eine durch Funk betätigte Einrichtung zum Löschen des Alarmsignales.

13. Diebstahlsicherung nach einem der Ansprüche 1 bis 11, gekennzeichnet durch eine manuell betätigte Löscheinrichtung für das Alarmsignal, welche eine Eingabeeinheit (92), einen Codespeicher (94) sowie einen mit den Ausgängen derselben verbundenen Komparator (90) aufweist, der das Löschsignal bereitstellt.

14. Diebstahlsicherung nach einem der Ansprüche 1 bis 13, dadurch gekennzeichnet, daß ihre Komponenten ständig mit der Fahrzeugbatterie oder einer separaten Versorgungsbatterie verbunden sind.

15. Diebstahlsicherung nach einem der Ansprüche 1 bis 14, dadurch gekennzeichnet, daß der Überwachungsrechner (26) mit einem Streckenspeicher (31) zusammenarbeitet, in welchem aufeinanderfolgende Standortkoordinaten abgelegt werden.

16. Diebstahlsicherung nach Anspruch 15, dadurch gekennzeichnet, daß der Streckenspeicher (31) einen mit niederer Auflösung arbeitenden Speicherabschnitt (31LR) aufweist, in welchem neue Standortkoordinaten jeweils nach Ablauf einer vorgegebenen Anzahl von Meßzyklen oder nach Zurücklegung einer vorgegebenen Strecke abgelegt werden.

17. Diebstahlsicherung nach Anspruch 15 oder 16, dadurch gekennzeichnet, daß der Streckenspeicher (31) einen mit hoher Auflösung arbeitenden Speicherabschnitt (32HR) aufweist, in welchen die Standortkoordinaten jeweils nach Ablauf eines Meßzyklus bzw. einer kleinen Anzahl von Meßzyklen oder nach Zurücklegung einer kleinen Wegstrecke abgespeichert werden.

18. Diebstahlsicherung nach einem der Ansprüche 15 bis 17, dadurch gekennzeichnet, daß der Streckenspeicher (31) zyklisch durchadressiert (57-3, 57-7) wird.
